# EUROPEAN PATENT SPECIFICATION

(11) **EP 2 325 006 B1**
(45) Date of publication and mention of the grant of the patent: **25.03.2015**
(21) Application number: 09811303.8
(22) Date of filing: 07.09.2009
(51) Int. Cl.: B23B 27/08, B32B 27/18, B32B 27/36, C08J 7/04, G02B 5/02, G02F 1/1335

(54) **MULTILAYER POLYESTER FILM**
MEHRSCHICHTIGER POLYESTERFILM
FILM POLYESTER MULTICOUCHE

(30) Priority: 08.09.2008 JP 2008229909; 08.09.2008 JP 2008229916; 23.04.2009 JP 2009104668; 23.04.2009 JP 2009104669
(43) Date of publication of application: 25.05.2011
(73) Proprietor: Mitsubishi Plastics, Inc., Tokyo 103-0021 (JP)
(72) Inventor: KAWASAKI, Taishi, Maibara-shi Shiga-ken 521-0234 (JP); FUJITA, Masato, Maibara-shi Shiga-ken 521-0234 (JP)
(74) Representative: Merkle, Gebhard
(86) International application number: PCT/JP2009/004404
(87) International publication number: WO 2010/026773

(56) References cited:
- JP-A- 2006 206 771
- JP-A- 2007 216 528
- US-A1- 2004 013 892
- DATABASE WPI Week 200767 Thomson Scientific, London, GB; AN 2007-711906 XP002703690, & JP 2007 181994 A (MITSUBISHI KAGAKU POLYESTER FILM KK) 19 July 2007 (2007-07-19)
- Frank Padera: "Introduction", Measuring absortance (k) and refractive index (n) of thin films with the PerkinElmer Lambda 950/1050 High performance UV-vis/NIR spectrometers, 31 December 2013 (2013-12-31), pages 1-9, XP055103646, Retrieved from the Internet: URL:http://www.perkinelmer.com/CMSResource s/Images/44-153901APP_Thin-films.pdf [retrieved on 2014-02-21]
- J M Siqueiros ET AL: "Determination of (nk) for absorbing thin films using reflectance measurements", Applied Optics, vol. 27, no. 20 15 October 1988 (1988-10-15), pages 4260-4264, XP055103647, Retrieved from the Internet: URL:http://optica.machorro.net/Personal/Ro berto/Arts/4_ApplOpt88b.pdf [retrieved on 2014-02-21]

## Description

### TECHNICAL FIELD

The present invention relates to a laminated polyester film suitably used as a base film for light diffusion sheets, for example, such a laminated polyester film used in various optical applications such as a backlight unit of liquid crystal displays, etc., in which it is required to reduce occurrence of uneven interference (interference fringes) owing to reflection of light and attain good adhesion to a light diffusion layer or an anti-sticking layer.

### BACKGROUND ART

In recent years, liquid crystal displays have been extensively used as a display device for TVs, personal computers, digital cameras, cellular phones, etc. Since these liquid crystal displays have no light-emitting function by themselves, those liquid crystal displays of such a type in which light is irradiated from a backside thereof using a backlight have now come to dominate.

As the backlight type liquid crystal displays, there are known those having a so-called edge light type structure or a so-called direct backlight type structure. With the recent tendency toward reduction in thickness of liquid crystal displays, the edge light type liquid crystal displays have been more frequently employed. The edge light type liquid crystal displays are generally constructed from a reflection sheet, a light guide plate, a light diffusion sheet and a prism sheet which are successively laminated in this order. The flow of light through such edge light type liquid crystal displays is designed such that the light entered from the backlight into the light guide plate is reflected on the reflection sheet and then emitted from the surface of the light guide plate. The light emitted from the light guide plate is entered into the light diffusion sheet, diffused therein and then emitted therefrom. The light emitted from the light diffusion sheet is entered into the prism sheet disposed next to the light diffusion sheet in which the light is converged in the normal direction and emitted therefrom toward the liquid crystal layer.

The light diffusion sheet used in the above construction serves for uniformly diffusing the light penetrated therethrough in the multiple directions, and is required to have a large light diffusion property and a high light transmittance. As the light diffusion sheet, there are known those having an irregular sheet surface, i.e., a so-called embossed surface which is formed by subjecting the sheet to heating and pressing treatments upon finishing, and those in which a light diffusion layer formed from a transparent resin containing particles is coated on a transparent base film. In addition, there has been proposed such a light diffusion sheet in which an anti-sticking layer comprising a binder and a small amount of beads is formed on the surface of the transparent base film which is opposite to its surface provided with the light diffusion layer, in order to prevent sticking (partial adhesion) between the light diffusion sheet and the light guide plate and the like (Patent Documents 1 to 3).

As the transparent base film used for forming the light diffusion sheet, there has been generally used a polyester film in view of a transparency and mechanical properties thereof. In general, an easy-bonding coating layer may be further provided as an intermediate layer between the polyester film as the base material and the light diffusion layer or the anti-sticking layer in order to enhance adhesion therebetween.

In recent years, in the filed of liquid crystal displays, there is an increasing demand for further enlargement in an image plane thereof as well as a high image quality. With such a demand, it is highly required to suppress occurrence of iris-like color patterns (uneven interference), in particular, under irradiation with light from a fluorescent lamp. As the fluorescent lamp, those of a three-band type have come to dominate for attaining a good reproducibility of a daylight color, so that the uneven interference is more likely to occur. The uneven interference is hardly caused on a side of the light diffusion layer because the light is highly diffused therein. However, the uneven interference is more readily caused on a side of the anti-sticking layer as compared to the side of the light diffusion layer because of low light diffusion in the anti-sticking layer. For this reason, an optical design of a coating layer to be laminated on the polyester film, in particular, on the side of the anti-sticking layer, becomes more important. More specifically, the coating layer is required to have a relatively high refractive index which is adjusted to fall between a refractive index of the polyester base material and that of a resin used for the light diffusion layer or the anti-sticking layer.

The coating layer whose refractive index is not suitably adjusted may fail to suppress occurrence of the uneven interference to a sufficient extent. If such a film exhibiting a considerable uneven interference is used for liquid crystal displays, there tend to remarkably occur various problems owing to deteriorated visibility. In addition, it is considered that various problems owing to the poor visibility which are caused by the uneven interference may further induce eye strain and damage to human health.

Under the above circumstances, it has been demanded to provide a coating layer having a high refractive index for improving the uneven interference. For example, as the method for reducing occurrence of the uneven interference on the side of the light diffusion layer, there has been proposed the method of enhancing a refractive index of a coating layer by using an aqueous polyester resin in combination with a metal chelate compound such as a water-soluble titanium chelate compound (Patent Document 4). However, owing to unstableness of the metal chelate compound in an aqueous solution, a coating solution for forming the coating layer tends to become unstable depending upon combination of the polyester resin therewith, so that the long-term production process tends to suffer from considerable increase in number of repeated works for replacement of the coating solution. In addition, the coating layer having the above construction may fail to exhibit a sufficient adhesion property depending upon the kind of resin used in the light diffusion layer or conditions of durability test. Further, since reduction in costs is demanded owing to recent price-down competition in the field of liquid crystal displays, it is very useful to reuse the polyester film. However, the above-constructed coating layer tends to suffer from significant coloration when re-melted for reuse thereof, so that the resulting light diffusion sheet tends to exhibit a yellowish color, thereby failing to effectively use the light diffusion sheet.

As an alternative method of enhancing a refractive index of the coating layer, there is known the method in which a condensed polycyclic aromatic compound is used therefor (Patent Documents 5 and 6). However, in recent years, a hard coat layer or an anti-reflection layer to be formed on the coating layer in an anti-reflection film generally has a high refractive index as compared to those of a light diffusion layer or an anti-sticking layer formed in a light diffusion film. For this reason, the coating layer suitably used for the anti-reflection film has a very high refractive index which is however too high to use the coating layer for the light diffusion sheet, which may result in occurrence of uneven interference in the light diffusion sheet. Further, the composition of the hard coat layer or the anti-reflection layer formed for the anti-reflection film is different from that of the light diffusion layer or the anti-sticking layer formed for the light diffusion film. Therefore, the coating layer exhibiting a good adhesion property to the anti-reflection film does not necessarily show a good complete adhesion property to the light diffusion film unless any suitable measure should be taken.

Meanwhile, depending upon light used as a backlight, a certain amount of an ultraviolet ray may be emitted therefrom. In this case, when irradiated with the ultraviolet ray for a long period of time, there tends to arise such a problem that various members of liquid crystal displays such as liquid crystal and a prism sheet may suffer from deteriorated quality thereof. To solve the problem concerning the deterioration owing to irradiation with the ultraviolet ray, there has been proposed the method in which an ultraviolet absorber is incorporated in a resin or beads forming the light diffusion layer or in a polypropylene-based resin layer to be laminated on the light diffusion layer (Patent Documents 7 to 9).

Patent Document 1: Japanese Patent Application Laid-Open (KOKAI) No. 2000-89007
Patent Document 2: Japanese Patent Application Laid-Open (KOKAI) No. 2004-4598
Patent Document 3: Japanese Patent Application Laid-Open (KOKAI) No. 2007-286166
Patent Document 4: Japanese Patent Application Laid-Open (KOKAI) No. 2006-208993
Patent Document 5: Japanese Patent Application Laid-Open (KOKAI) No. 2006-175628
Patent Document 6: Japanese Patent Application Laid-Open (KOKAI) No. 2007-181994
Patent Document 7: Japanese Patent Application Laid-Open (KOKAI) No. 2005-37591
Patent Document 8: Japanese Patent Application Laid-Open (KOKAI) No. 2002-174704
Patent Document 9: Japanese Patent Application Laid-Open (KOKAI) No. 2003-302629

Patent document 10: US2004013892, relates to a biaxially oriented laminated aromatic polyester film, used in a light transmission layer of a display, which has a coating layer containing a polyester resin, an acrylic resin and wax, said coating layer being laminated on at least one surface of the aromatic polyester film. The coating layer has transparency, easy slipperiness and excellent adhesion to a hard coat layer. On the hard coat layer, an antireflection layer may further be formed

### SUMMARY OF THE INVENTION

### Problems to be Solved by the Invention

The present invention has been accomplished to solve the above conventional problems. An object of the present invention is to provide a laminated polyester film for a light diffusion sheet which is capable of suppressing occurrence of uneven interference owing to reflection of light and exhibiting good adhesion to a light diffusion layer or an anti-sticking layer and which can be suitably used, for example, in a backlight unit for liquid crystal displays, etc.

### Means for Solving Problems

As a result of the present inventors' earnest study in view of the above problems, it has been found that these problems can be readily solved by using a laminated polyester film having a specific structure. The present invention has been attained on the basis of this finding.

That is, in accordance with the present invention, there is provided a laminated polyester film comprising: a polyester film, coating layers respectively formed on both surfaces of the polyester film, said coating layers each comprising a condensed polycyclic aromatic compound and 5 to 90 % by weight of a urethane resin or 5 to 80 % by weight of an acrylic resin, and a light diffusion layer formed on the coating layer and which has a thickness of 1 to 100 µm and which comprises a binder and particles having an average particle diameter of 1 to 50 µm, wherein the content of the condensed polycyclic aromatic moieties in the condensed polycyclic aromatic compound in the coating layer is in the range of 5 to 80 % by weight, and the content of the condensed polycyclic aromatic moieties in the coating layer is in the range of 1 to 70 % by weight..

The present invention is described in more detail below.

The polyester film constituting the laminated polyester film of the present invention may have either a single layer structure or a multilayer structure. Unless departing from the scope of the present invention, the polyester film may have not only a two or three layer structure but also a four or more multilayer structure, and the layer structure of the polyester film is not particularly limited.

The polyester film used in the present invention may also comprise an ultraviolet absorber in order to present a liquid crystal or the like in the liquid crystal displays from being deteriorated owing to irradiation with an ultraviolet ray. The ultraviolet absorber is not particularly limited as long as it is a compound having a capability of absorbing an ultraviolet ray and can withstand heat applied during a process for producing the polyester film.

As the ultraviolet absorber, there are generally known an organic ultraviolet absorber and an inorganic ultraviolet absorber. In view of a good transparency, among these ultraviolet absorbers, the organic ultraviolet absorber is preferred. Examples of the organic ultraviolet absorber include, but are not particularly limited to, cyclic iminoester-based ultraviolet absorbers, benzotriazole-based ultraviolet absorbers and benzophenone-based ultraviolet absorbers. Among these organic ultraviolet absorbers, cyclic iminoester-based ultraviolet absorbers and benzotriazole-based ultraviolet absorbers are preferred in view of a good durability. These ultraviolet absorbers may be used in combination of any two or more thereof.

Specific examples of the benzotriazole-based ultraviolet absorbers include, but are not particularly limited to, 2-[2'-hydroxy-5'-(methacryloyloxymethyl)phenyl]-2H-benzotriazole, 2-[2'-hydroxy-5'-(methacryloyloxyethyl)phenyl]-2H-benzotriazole, 2-[2'-hydroxy-5'-(methacryloyloxypropyl)phenyl]-2H-benzotriazole, 2-[2'-hydroxy-5'-(methacryloyloxyhexyl)phenyl]-2H-benzotriazole, 2-[2'-hydroxy-3'-tert-butyl-5'-(methacryloyloxyethyl)phenyl]-2H-benzotriazole, 2-[2'-hydroxy-5'-tert-butyl-3'-(methacryloyloxyethyl)phenyl]-2H-benzotriazole, 2-[2'-hydroxy-5'-(methacryloyloxyethyl)phenyl]-5-chloro-2H-benzotriazole, 2-[2'-hydroxy-5'-(methacryloyloxyethyl)phenyl]-5-methoxy-2H-benzotriazole, 2-[2'-hydroxy-5'-(methacryloyloxyethyl)phenyl]-5-cyano-2H-benzotriazole, 2-[2'-hydroxy-5'-(methacryloyloxyethyl)phenyl]-5-tert-butyl-2H-benzotriazole and 2-[2'-hydroxy-5'-(methacryloyloxyethyl)phenyl]-5-nitro-2H-benzotriazole.

Specific examples of the cyclic iminoester-based ultraviolet absorbers include, but are not particularly limited to, 2-methyl-3,1-benzoxazin-4-one, 2-butyl-3,1-benzoxazin-4-one, 2-phenyl-3,1-benzoxazin-4-one, 2-(1- or 2-naphthyl)-3,1-benzoxazin-4-one, 2-(4-biphenyl)-3,1-benzoxazin-4-one, 2-p-nitrophenyl-3,1-benzoxazin-4-one, 2-m-nitrophenyl-3,1-benzoxazin-4-one, 2-p-benzoylphenyl-3,1-benzoxazin-4-one, 2-p-methoxyphenyl-3,1-benzoxazin-4-one, 2-o-methoxyphenyl-3,1-benzoxazin-4-one, 2-cyclohexyl-3,1-benzoxazin-4-one, 2-p-(or m-)phthalimidophenyl-3,1-benzoxazin-4-one, N-phenyl-4-(3,1-benzoxazin-4-on-2-yl)phthalimide, N-benzoyl-4-(3,1-benzoxazin-4-on-2-yl)aniline, N-benzoyl-N-methyl-4-(3,1-benzoxazin-4-on-2-yl)aniline, 2-(p-(N-methylcarbonyl)phenyl-3,1-benzoxazin-4-one, 2,2'-bis(3,1-benzoxazin-4-one), 2,2'-ethylene-bis(3,1-benzoxazin-4-one), 2,2'-tetramethylene-bis(3,1-benzoxazin-4-one), 2,2'-decamethylene-bis(3,1-benzoxazin-4-one), 2,2'-p-phenylene-bis(3,1-benzoxazin-4-one), 2,2'-m-phenylene- bis(3,1-benzoxazin-4-one), 2,2'-(4,4'-diphenylene)bis(3,1-benzoxazin-4-one), 2,2'-(2,6- or 1,5-naphthylene)bis(3,1-benzoxazin-4-one), 2,2'-(2-methyl-p-phenylene)bis(3,1-benzoxazin-4-one), 2,2'-(2-nitro-p-phenylene)bis(3,1-benzoxazin-4-one), 2,2'-(2-chloro-p-phenylene)bis(3,1-benzoxazin-4-one), 2,2'-(1,4-cyclohexylene)bis(3,1-benzoxazin-4-one), 1,3,5-tri(3,1-benzoxazin-4-on-2-yl)benzene, 1,3,5-tri(3,1-benzoxazin-4-on-2-yl)naphthalene, 2,4,6-tri(3,1-benzoxazin-4-on-2-yl)naphthalene, 2,8-dimethyl-4H,6H-benzo(1,2-d; 5,4-d')bis(1,3)-oxazin-4,6-dione, 2,7-dimethyl-4H,9H-benzo(1,2-d; 4,5-d')bis(1,3)-oxazin-4,9-dione, 2,8-diphenyl-4H,8H-benzo(1,2-d; 5,4-d')bis(1,3)-oxazin-4,6-dione, 2,7-diphenyl-4H,9H-benzo(1,2-d; 4,5-d')bis(1,3)-oxazin-4,6-dione, 6,6'-bis(2-methyl-4H,3,1-benzoxazin-4-one), 6,6'-bis(2-ethyl-4H,3,1-benzoxazin-4-one), 6,6'-bis(2-phenyl-4H,3,1-benzoxazin-4-one), 6,6'-methylene- bis(2-methyl-4H,3,1-benzoxazin-4-one), 6,6'-methylene-bis(2-phenyl-4H,3,1-benzoxazin-4-one), 6,6'-ethylene-bis(2-methyl-4H,3,1-benzoxazin-4-one), 6,6'-ethylene-bis(2-phenyl-4H,3,1-benzoxazin-4-one), 6,6'-butylene-bis(2-methyl-4H,3,1-benzoxazin-4-one), 6,6'-butylene-bis(2-phenyl-4H,3,1-benzoxazin-4-one), 6,6'-oxy-bis(2-methyl-4H,3,1-benzoxazin-4-one), 6,6'-oxy-bis(2-phenyl-4H,3,1-benzoxazin-4-one), 6,6'-sulfonyl-bis(2-methyl-4H,3,1-benzoxazin-4-one), 6,6'-sulfonyl-bis(2-phenyl-4H,3,1-benzoxazin-4-one), 6,6'-carbonyl-bis(2-methyl-4H,3,1-benzoxazin-4-one), 6,6'-carbonyl-bis(2-phenyl-4H,3,1-benzoxazin-4-one), 7,7'-methylene-bis(2-methyl-4H,3,1-benzoxazin-4-one), 7,7'-methylene-bis(2-phenyl-4H,3,1-benzoxazin-4-one), 7,7'- bis(2-methyl-4H,3,1-benzoxazin-4-one), 7,7'-ethylene-bis(2-methyl-4H,3,1-benzoxazin-4-one), 7,7'-oxy-bis(2-methyl-4H,3,1-benzoxazin-4-one), 7,7'-sulfonyl-bis(2-methyl-4H,3,1-benzoxazin-4-one), 7,7'-carbonyl-bis(2-methyl-4H,3,1-benzoxazin-4-one), 6,7'-bis(2-methyl-4H,3,1-benzoxazin-4-one), 6,7'-bis(2-phenyl-4H,3,1-benzoxazin-4-one), 6,7'-methylene-bis(2-methyl-4H,3,1-benzoxazin-4-one) and 6,7'-methylene-bis(2-phenyl-4H,3,1-benzoxazin-4-one).

Among the above compounds, in view of a good hue, the benzoxazinone-based compounds are preferably used because they are hardly colored yellowish. Examples of the suitable benzoxazinone-based compounds include those compounds represented by the following general formula (1).

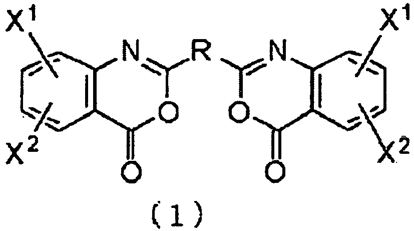

In the above general formula, R is a divalent aromatic hydrocarbon group; and X¹ and X² are each independently hydrogen or a group selected from the following functional groups, although not particularly limited thereto.

Examples of the functional groups include an alkyl group, an aryl group, a heteroaryl group, halogen, an alkoxy group, an aryloxy group, a hydroxyl group, a carboxyl group, an ester group and a nitro group. Among the compounds represented by the above structural formula, in the present invention, 2,2'-(1,4-phenylene)bis[4H-3,1-benzoxazin-4-one] is especially preferred.

The amount of the ultraviolet absorber incorporated in the laminated polyester film of the present invention may vary depending upon the thickness of the polyester film and therefore is not particularly limited. The content of the ultraviolet absorber in the laminated polyester is in the range of not more than 10.0% by weight and preferably 0.1 to 3.0% by weight. When the content of the ultraviolet absorber is more than 10.0% by weight, the ultraviolet absorber tends to be bled out on the surface of the laminated polyester film, which tends to result in deterioration in surface functionality such as deterioration in adhesion property, etc.

The film in the form of a multilayer film preferably has at least three layers structure. In this case, the ultraviolet absorber is preferably incorporated in an intermediate layer thereof. By incorporating the ultraviolet absorber in the intermediate layer, the compound can be prevented from being bled out on the surface of the film, so that the resulting film can maintain its properties such as adhesion property.

The laminated polyester film of the present invention preferably has a light transmittance of not more than 10% and more preferably not more than 5% as measured at a wavelength of 380 nm for the purpose of preventing deterioration of liquid crystal, etc., owing to irradiation with an ultraviolet ray when it is used as a part of liquid crystal displays.

The polyester used in the present invention may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like. On the other hand, as a dicarboxylic acid component of the copolyester, there may be mentioned at least one compound selected from isophthalic acid, phthalic acid, terephthalic acid, 2,6-naphthalenedicarboxylic acid, adipic acid, sebacic acid, oxycarboxylic acids (such as, for example, p-oxybenzoic acid) or the like. As a glycol component of the polyester, there may be mentioned at least one compound selected from ethylene glycol, diethylene glycol, propylene glycol, butanediol, 4-cyclohexanedimethanol, neopentyl glycol or the like.

Further, owing to a heat history and the like during the film forming process, there tends to arise such a problem that oligomers contained in the film are precipitated on the surface of the film, which will result in contamination of the production line or deterioration in visibility of the resulting film due to deteriorated haze of the film, etc. For this reason, in the film having a multilayer structure, it is possible to use a raw polyester having a less oligomer content as the polyester forming an outermost layer thereof. Examples of the method for reducing the oligomer content in the polyester include a solid phase polymerization, etc.

For the purpose of imparting an easy-slipping property to the film and preventing occurrence of flaws in the film, particles are preferably blended in the polyester layer in the film of the present invention. The kind of particles to be blended in the polyester layer is not particularly limited as long as the particles are capable of imparting a good easy-slipping property to the film. Specific examples of the particles include particles of silica, calcium carbonate, magnesium carbonate, barium carbonate, calcium sulfate, calcium phosphate, magnesium phosphate, kaolin, aluminum oxide, titanium oxide, etc. In addition, there may also be used heat-resistant organic particles as described in Japanese Patent Publication (KOKOKU) No. 59-5216, Japanese Patent Application Laid-Open (KOKAI) No. 59-217755 or the like. Examples of the other heat-resistant organic particles include particles of thermosetting urea resins, thermosetting phenol resins, thermosetting epoxy resins, benzoguanamine resins, etc. Further, there may also be used deposited particles obtained by precipitating and finely dispersing a part of metal compounds such as a catalyst during the process for production of the polyester.

On the other hand, the shape of the particles used above is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the particles used above is usually in the range of 0.01 to 3 µm and preferably 0.1 to 2 µm. When the average particle diameter of the particles is less than 0.01 µm, the particles may fail to impart an easy-slipping property to the polyester layer, or tend to be aggregated together and therefore exhibit a poor dispersibility, which will cause deterioration in transparency of the resulting film. On the other hand, when the average particle diameter of the particles is more than 3 µm, the obtained film tends to be too coarse on the surface thereof, thereby causing problems in the subsequent steps for forming a light diffusion layer, an anti-sticking layer and the like.

The content of the particles in the polyester layer is usually in the range of 0.001 to 5% by weight and preferably 0.005 to 3% by weight. When the content of the particles in the polyester layer is less than 0.001% by weight, the resulting film tends to be insufficient in easy-slipping property. On the other hand, when the content of the particles in the polyester layer is more than 5% by weight, the resulting film tends to be insufficient in transparency.

The method of adding the particles to the polyester layer is not particularly limited, and any conventionally known methods can be suitably used therefor. For example, the particles may be added at any optional stages in the process for production of the polyester forming the respective layers. The particles are preferably added to the polyester after completion of the esterification reaction or transesterification reaction.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder, or the like.

Meanwhile, the polyester film used in the present invention may also comprise, in addition to the above particles, known additives such as an antioxidant, an antistatic agent, a thermal stabilizer, a lubricant, a dye, a pigment, etc., if required.

The thickness of the polyester film used in the present invention is not particularly limited as long as it lies within any suitable range capable of maintaining a film shape, and is usually in the range of 10 to 350 µm and preferably 50 to 250 µm.

Next, an example of the process of producing the polyester film used in the present invention is more specifically explained, although not particularly limited thereto. That is, in the production process, there is preferably used such a method in which the above-mentioned raw polyester material is extruded from a die in the form of a molten sheet, and the molten sheet is cooled and solidified on a cooling roll to obtain an unstretched sheet. In this case, in order to enhance a flatness of the sheet, it is preferred to enhance adhesion between the sheet and the rotary cooling drum. For this purpose, an electrostatic adhesion method and/or a liquid coating adhesion method are preferably used. Next, the thus obtained unstretched sheet is biaxially stretched. In such a case, the unstretched sheet is first stretched in one direction thereof using a roll-type or tenter-type stretching machine. The stretching temperature is usually 70 to 120°C and preferably 80 to 110°C, and the stretch ratio is usually 2.5 to 7 times and preferably 3.0 to 6 times. Next, the thus stretched film is stretched in the direction perpendicular to the stretching direction of the first stage. In this case, the stretching temperature is usually 70 to 170°C, and the stretch ratio is usually 3.0 to 7 times and preferably 3.5 to 6 times. Successively, the resulting biaxially stretched sheet is heat-treated at a temperature of 180 to 270°C under a tension or relaxation within 30% to obtain a biaxially stretched film. Upon the above stretching step, there may also be used the method in which the stretching in each direction is carried out in two or more stages. In such a case, the multi-stage stretching is preferably performed such that the stretch ratio in each of the two directions is finally fallen within the above-specified range.

Also, upon producing the polyester film constituting the laminated polyester film according to the present invention, there may also be used a simultaneous biaxial stretching method. The simultaneous biaxial stretching method is such a method in which the above unstretched sheet is stretched and oriented in both of the machine and width directions at the same time while maintaining the sheet in a suitable temperature-controlled condition at a temperature of usually 70 to 120°C and preferably 80 to 110°C. The stretch ratio used in the simultaneous biaxial stretching method is 4 to 50 times, preferably 7 to 35 times and more preferably 10 to 25 times in terms of an area ratio of the film. Successively, the obtained biaxially stretched sheet is heat-treated at a temperature of 170 to 250°C under a tension or relaxation within 30% to obtain a stretched oriented film. As the apparatus used in the above simultaneous biaxial stretching method, there may be employed those stretching apparatuses of any conventionally known type such as a screw type stretching apparatus, a pantograph type stretching apparatus and a linear drive type stretching apparatus.

Next, the method of forming the coating layer constituting the laminated polyester film according to the present invention is explained. The coating layer may be formed by either an in-line coating method in which the surface of the polyester film is subjected to coating treatment during the stretching step of the polyester film, an off-line coating method in which the polyester film produced is once transferred to an outside of the film production system and subjected to coating treatment, or combination of these methods. Among these methods, the in-line coating method is preferably used because the coating layer can be produced simultaneously with formation of the polyester film and therefore at low costs, and the thickness of the coating layer can be varied by controlling a stretch ratio of the polyester film.

For example, in the case of a sequential biaxial stretching, the in-line coating treatment may be carried out, in particular, after completion of the longitudinal stretching but before initiation of the lateral stretching, although not particularly limited thereto. When the coating layer is formed on the polyester film by the in-line coating method, the coating can be carried out simultaneously with formation of the polyester film, and the coating layer can be treated at a high temperature. As a result, it is possible to produce a film suitable as the polyester film used in the present invention.

In the present invention, it is essentially required that the coating layer comprising a condensed polycyclic aromatic compound and a urethane resin or an acrylic resin is formed on each of both surfaces of the polyester film.

In the present invention, it is required to well adjust a refractive index of the coating layer. The coating layer is preferably designed to have an optimum refractive index hardly undergoing occurrence of uneven interference such that the refractive index of the coating layer is close to a geometric mean of a refractive index of the polyester film and a refractive index of the light diffusion layer or the anti-sticking layer. For example, when it is assumed that the refractive index of the polyester film is about 1.65 and the refractive index of a resin used in the light diffusion layer or the anti-sticking layer is about 1.50, an ideal refractive index of the coating layer located between these layers is about 1.57. The refractive index of the coating layer is a high refractive index which is not usually readily achievable only by the urethane resin or the acrylic resin as a coating layer component used for imparting an easy-bonding property to the coating layer. Thus, it is required that the refractive index of the coating layer is controlled to a relatively high value. Further, the coating layer is to be formed of a compound capable of preventing deterioration in adhesion property thereof. In the present invention, by using the condensed polycyclic aromatic compound capable of designing the above performance, there is provided an effective method of forming the coating layer which is free from occurrence of uneven interference and can exhibit a good adhesion property.

The coating layers respectively formed on both surfaces of the polyester film in the present invention may be either identical to or different from each other unless the subject matter of the present invention is adversely affected thereby. However, the coating layers are preferably identical to each other in view of facilitated production of the film. The case where the different kinds of coating layers are to be formed, include, for example, such a case where occurrence of uneven interference on both of the light diffusion layer formed on one surface of the polyester film and the anti-sticking layer formed on the other surface of the polyester film is hardly prevented by formation of the same coating layers because both the layers are considerably different in refractive index from each other, or such a case where a good adhesion to both of the light diffusion layer and the anti-sticking layer is not achievable by formation of the same coating layers because respective resins used for forming the light diffusion layer and the anti-sticking layer are different from each other. However, in view of facilitated production, it is usually favorable that the light diffusion layer and the anti-sticking layer are respectively formed from the same resin or similar compounds. For the above reason, it is possible to form the same coating layer for each of the layers, which provides a preferred embodiment of the coating layer in view of good productivity and convenience.

Specific examples of the condensed polycyclic aromatic compound used in the present invention include compounds having the structure represented by the following formulae.

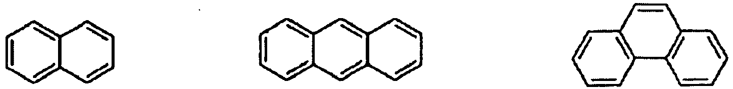

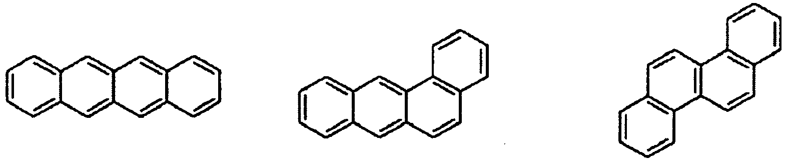

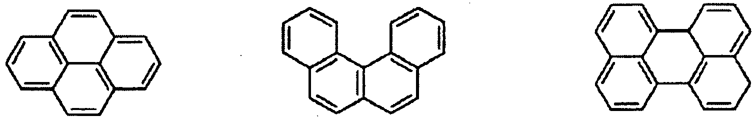

In view of a good coatability of the coating layer on the polyester film, the condensed polycyclic aromatic compound is preferably in the form of a high-molecular compound such as, for example, polyester resins, acrylic resins and urethane resins. Among these compounds, more preferred are polyester resins because a larger number of condensed polycyclic aromatic moieties can be introduced into the polyester resins.

As the method of incorporating the condensed polycyclic aromatic moieties into the polyester resins, there may be mentioned, for example, the method in which two or more hydroxyl groups as substituent groups are introduced into the condensed polycyclic aromatic moieties to form a diol component or a polyhydric hydroxyl component of the polyester resins, or two or more carboxyl groups as substituent groups are introduced into the condensed polycyclic aromatic moieties to form a dicarboxylic acid component or a polyvalent carboxylic acid component of the polyester resins.

In the process for producing the laminated polyester film, in view of a less coloration thereof, the condensed polycyclic aromatic compound contained in the coating layer is preferably such a compound having a naphthalene skeleton. In addition, in view of good adhesion of the coating layer to the light diffusion layer or the anti-sticking layer formed thereon as well as a good transparency thereof, resins into which a naphthalene skeleton as a polyester constituting component is incorporated are suitably used. Examples of the typical naphthalene skeleton include 1,5-naphthalenedicarboxylic acid, 2,6-naphthalenedicarboxylic acid and 2,7-naphthalenedicarboxylic acid.

Meanwhile, in addition to the above hydroxyl and carboxyl groups, a sulfur element-containing substituent group, an aromatic substituent group such as a phenyl group, a halogen element group, etc., may be introduced into the condensed polycyclic aromatic compound, whereby it is expected to improve a refractive index of the coating layer. From the viewpoints of good coatability and adhesion, an alkyl group, an ester group, an amide group, etc., may also be further introduced into the condensed polycyclic aromatic compound.

The acrylic resin used in the present invention is in the form of a polymer obtained from a polymerizable monomer having a carbon-to-carbon double bond such as, typically, an acrylic monomer and a methacrylic monomer. The polymer may be either a homopolymer or a copolymer. The polymer may also include a copolymer of the polymer and the other polymer (for example, a polyester, a polyurethane, etc.). Examples of the copolymer include a block copolymer and a graft copolymer. In addition, the polymer may also include a polymer obtained by polymerizing the polymerizable monomer having a carbon-to-carbon double bond in a polyester solution or a polyester dispersion (which may also be in the form of a mixture of the polymers). Further, the polymer may also include a polymer obtained by polymerizing the polymerizable monomer having a carbon-to-carbon double bond in a polyurethane solution or a polyurethane dispersion (which may also be in the form of a mixture of the polymers). Similarly, the polymer may also include a polymer obtained by polymerizing the polymerizable monomer having a carbon-to-carbon double bond in the other polymer solution or the other polymer dispersion (which may also be in the form of a mixture of the polymers).

The above polymerizable monomer having a carbon-to-carbon double bond is not particularly limited. Examples of the typical compounds as the polymerizable monomer include various carboxyl group-containing monomers such as acrylic acid, methacrylic acid, crotonic acid, itaconic acid, fumaric acid, maleic acid and citraconic acid, and salts thereof; various hydroxyl group-containing monomers such as 2-hydroxyethyl (meth)acrylate, 2-hydroxypropyl (meth)acrylate, 4-hydroxybutyl (meth)acrylate, monobutylhydroxyl fumarate and monobutylhydroxyl itaconate; various (meth)acrylic acid esters such as methyl (meth)acrylate, ethyl (meth)acrylate, propyl (meth)acrylate, butyl (meth)acrylate and lauryl (meth)acrylate; various nitrogen-containing vinyl-based monomers such as (meth)acrylamide, diacetone acrylamide, N-methylol acrylamide and (meth)acrylonitrile; various styrene derivatives such as styrene, α-methyl styrene, divinyl benzene and vinyl toluene; various vinyl esters such as vinyl acetate and vinyl propionate; various silicon-containing polymerizable monomers such as γ-methacryloxypropyl trimethoxysilane, vinyl trimethoxysilane and "SILAPRENE FM-07" (methacryloyl silicon macromer) produced by Chisso Corp.; various phosphorus-containing vinyl-based monomers; various halogenated vinyl-based monomers such as vinyl chloride, vinylidene chloride, vinyl fluoride, trifluorochloroethylene, tetrafluoroethylene, chlorotrifluoroethylene and hexafluoropropylene; and various conjugated dienes such as butadiene.

In order to enhance a refractive index of the coating layer, the acrylic resin may comprise a sulfur compound, an aromatic compound, etc., unless an adhesion property of the coating layer is adversely affected thereby. In addition, in order to enhance adhesion of the coating layer to the light diffusion layer and the anti-sticking layer, there are preferably used acrylic resins having a functional group such as a hydroxyl group, an amino group and an amide group.

The urethane resin used in the present invention is a high-molecular compound having a urethane bond in a molecule thereof. In view of a suitability for the in-line coating, water-dispersible or water-soluble urethane resins are preferably used. In order to impart a water dispersibility or a water solubility to the urethane resins, it is important that a hydrophilic group such as a hydroxyl group, a carboxyl group, a sulfonic group, a sulfuryl group, a phosphoric group and an ether group is introduced into the urethane resins. Among these hydrophilic groups, from the viewpoints of good coating properties and a good adhesion property, preferred are a carboxyl group and a sulfonic group.

As a method of producing the urethane resin as a constitutional component of the coating layer used in the present invention, there may be mentioned the method using the reaction between a hydroxyl group and an isocyanate. As the hydroxy group as a raw material of the urethane resin, a polyol is preferably used. Examples of the polyol include polyether polyols, polyester polyols, polycarbonate-based polyols, polyolefin polyols and acrylic polyols. These compounds may be used alone or in combination of any two or more thereof.

Examples of the polyether polyols include polyethylene glycol, polypropylene glycol, polyethylene/propylene glycol, polytetramethylene ether glycol and polyhexamethylene ether glycol.

Examples of the polyester polyols include those produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol).

Examples of the polycarbonate-based polyols include those polycarbonate diols obtained by dealcoholization reaction between a polyhydric alcohol and dimethyl carbonate, diethyl carbonate, diphenyl carbonate, ethylene carbonate, etc., for example, poly(1,6-hexylene)carbonate and poly(3-methyl-1,5-pentylene)carbonate.

Examples of the polyisocyanate compound used for obtaining the urethane resin include aromatic diisocyanates such as tolylene diisocyanate, xylylene diisocyanate, methylene diphenyl diisocyanate, phenylene diisocyanate, naphthalene diisocyanate and tolidine diisocyanate; aromatic ring-containing aliphatic diisocyanates such as α,α,α',α'-tetramethyl xylylene diisocyanate; aliphatic diisocyanates such as methylene diisocyanate, propylene diisocyanate, lysine diisocyanate, trimethyl hexamethylene diisocyanate and hexamethylene diisocyanate; and alicyclic diisocyanates such as cyclohexane diisocyanate, methyl cyclohexane diisocyanate, isophorone diisocyanate, dicyclohexylmethane diisocyanate and isopropylidene dicyclohexyl diisocyanate. These polyisocyanate compounds may be used alone or in combination of any two or more thereof.

When the urethane resin is synthesized, there may be used a chain extender. The chain extender is not particularly limited as long as it has two or more active groups capable of reacting with an isocyanate group. In general, there may be mainly used such a chain extender having two hydroxyl groups or two amino group.

Examples of the chain extender having two hydroxyl groups include glycols, e.g., aliphatic glycols such as ethylene glycol, propylene glycol and butanediol; aromatic glycols such as xylylene glycol and bishydroxyethoxybenzene; and ester glycols such as neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; alicyclic diamines such as 1-amino-3-aminomethyl-3,5,5-trimethyl cyclohexane, dicyclohexylmethanediamine, isopropylidenecyclohexyl-4,4'-diamine, 1,4-diaminocyclohexane and 1,3-bisaminomethyl cyclohexane.

In order to enhance a refractive index of the coating layer, the urethane resin may comprise an aromatic compound unless an adhesion property of the coating layer is adversely affected thereby. As the aromatic compound, there may be used those having a benzene skeleton or a naphthalene skeleton from the viewpoint of less discoloration during the production process of the polyester film.

In the laminated polyester film for a light diffusion sheet according to the present invention, in order to improve surface properties of the coating layer and enhance a visibility when forming various layers such as the light diffusion layer and the anti-sticking layer on the surface of the coating layer as well as improve a transparency of the resulting film, a binder polymer other than the acrylic resin and the urethane resin may be used in combination therewith. When the coating layer is produced only from the polyester resin without using any acrylic resin and urethane resin, an adhesion property of the coating layer to the light diffusion layer or the anti-sticking layer may become insufficient in some cases. Therefore, in such a case, it is required to use the binder polymer in combination with the acrylic resin or urethane resin in such a range that the subject matter of the present invention is not adversely affected thereby.

The "binder polymer" used in the present invention is defined as a high-molecular compound having a number-average molecular weight (Mn) of not less than 1000 as measured by gel permeation chromatography (GPC) according to a flow scheme for evaluation of safety of high-molecular compounds (Council of Chemical Substances; November, 1985), and exhibiting a good film-forming property.

Specific examples of the binder polymer include polyester resins, polyalkylene glycols, polyalkylene imines, methyl cellulose, hydroxy cellulose, starches, etc. Also, the binder polymer may be used in combination with the acrylic resin and the urethane resin.

Further, the coating layer may also be used in combination with a crosslinking agent unless the subject matter of the present invention is adversely affected thereby. By using the crosslinking agent, the coating layer can be strengthened in its structure and, as a result, tends to be enhanced in a wet heat resistance. As the crosslinking agent, there may be used various known resins. Examples of the crosslinking agent include melamine compounds, epoxy compounds, oxazoline compounds and isocyanate compounds.

The melamine compounds are compounds having a melamine skeleton therein. Examples of the melamine compounds include alkylolated melamine derivatives, partially or completely etherified compounds obtained by reacting the alkylolated melamine derivative with an alcohol, and a mixture of these compounds. Examples of the alcohol suitably used for the above etherification include methyl alcohol, ethyl alcohol, isopropyl alcohol, n-butanol and isobutanol. The melamine compound may be either a monomer or a di- or higher polymer, or may be in the form of a mixture thereof. In addition, there may also be used those compounds obtained by co-condensing a urea or the like to a part of melamine. Further, a catalyst may also be used to enhance a reactivity of the melamine compound.

Examples of the epoxy compound include compounds having an epoxy group in a molecule thereof, and prepolymers and cured products of the compounds. Typical examples of the epoxy compound include condensates of epichlorohydrin and bisphenol A. In particular, a reaction product of a low-molecular polyol and epichlorohydrin can provide an epoxy resin having an excellent water solubility.

Examples of the oxazoline compound include those compounds having an oxazoline ring in a molecule thereof such as monomers having an oxazoline ring and polymers synthesized by using the oxazoline compound as a raw material thereof.

Examples of the isocyanate compound include those compounds having an isocyanate group in a molecule thereof. Specific examples of the isocyanate compound include hexamethylene diisocyanate, trimethyl hexamethylene diisocyanate, cyclohexylene diisocyanate, xylylene diisocyanate, isophorone diisocyanate, naphthalene diisocyanate, tolylene diisocyanate, and blocked products or derivatives thereof.

These crosslinking agents may be used alone or in the form of a mixture of any two or more thereof. Further, in view of the application to in-line coating, the crosslinking agent preferably exhibits a water solubility or a water dispersibility.

In addition, for the purpose of improving a bonding property and a slipping property of the coating layer, inert particles may be incorporated therein. Specific examples of the inert particles include particles of silica, alumina, kaolin, calcium carbonate, titanium oxide, etc., and organic particles.

Further, the coating layer may also comprise various additives such as a defoaming agent, a coatability improver, a thickening agent, an organic lubricant, an antistatic agent, an ultraviolet absorber, an antioxidant, a foaming agent and a dye, if required, unless the subject matter of the present invention is adversely affected thereby.

The content of the condensed polycyclic aromatic moieties in the condensed polycyclic aromatic compound used in the coating layer constituting the laminated polyester film of the present invention is in the range of 5 to 80% by weight, and more preferably 10 to 60% by weight based on the weight of the condensed polycyclic aromatic compound. Further, the content of the condensed polycyclic aromatic moieties in the coating layer is in the range of 1 to 70% by weight, more preferably 2 to 40% by weight and still more preferably 4 to 25% by weight based on the whole weight of the coating layer. When the content of the condensed polycyclic aromatic moieties lies out of the above-specified range, the resulting film tends to be deteriorated in visibility owing to occurrence of uneven interference after forming the light diffusion layer or the anti-sticking layer on the coating layer, or tends to be deteriorated in surface properties of the coating layer. Meanwhile, the content of the condensed polycyclic aromatic moieties may be determined by such a method in which the coating layer is dissolved and extracted in a suitable solvent or warm water, and then after the resulting solution is fractionated by chromatography, the structure of the aimed product is analyzed by NMR or IR, and further analyzed by pyrolysis GC-MS (gas chromatography/mass spectrometry).

The content of the acrylic resin in the coating layer constituting the laminated polyester film of the present invention is in the range of 5 to 80% by weight, preferably 15 to 70% by weight and more preferably 25 to 50% by weight as measured in terms of a weight ratio thereof based on the whole coating layer. When the content of the acrylic resin in the coating layer is less than 5% by weight, the resulting coating layer tends to be deteriorated in adhesion to the light diffusion layer or the anti-sticking layer. When the content of the acrylic resin in the coating layer is more than 80% by weight, the refractive index of the coating layer tends to be hardly increased, so that the resulting film tends to be deteriorated in visibility owing to occurrence of uneven interference after forming the light diffusion layer or the anti-sticking layer on the coating layer.

The content of the urethane resin in the coating layer constituting the laminated polyester film of the present invention is in the range of 5 to 90% by weight, preferably 15 to 80% by weight and more preferably 25 to 70% by weight as measured in terms of a weight ratio thereof based on the whole coating layer. When the content of the urethane resin in the coating layer is less than 5% by weight, the resulting coating layer tends to be deteriorated in adhesion to the light diffusion layer or the anti-sticking layer. When the content of the urethane resin in the coating layer is more than 90% by weight, the resulting film tends to be deteriorated in visibility owing to occurrence of uneven interference after forming the light diffusion layer or the anti-sticking layer on the coating layer.

The analysis of the components contained in the coating layer may be conducted, for example, by surface analysis such as TOF-SIMS.

When forming the coating layer by in-line coating, the laminated polyester film is preferably produced by the method in which an aqueous solution or a water dispersion of any of the above mentioned compounds is prepared as a coating solution having a concentration of about 0.1 to about 50% by weight in terms of a solid content thereof, and the thus prepared coating solution is applied onto the polyester film. The coating solution may also comprise a small amount of an organic solvent for the purpose of improving a dispersibility in water, a film-forming property, etc., unless the subject matter of the present invention is adversely affected thereby. The organic solvent may be used alone, or two or more organic solvents may be appropriately used in the form of a mixture thereof.

In the laminated polyester film of the present invention, the thickness of the coating layer formed on the polyester film is usually in the range of 0.02 to 0.3 g/m², preferably 0.05 to 0.25 g/m² and more preferably 0.07 to 0.20 g/m². Upon adjustment of the refractive index of the coating layer according to the present invention, when the coating amount of the coating layer is out of the above-specified range, the resulting film tends to be deteriorated in visibility owing occurrence of uneven interference after forming the light diffusion layer or the anti-sticking layer on the coating layer.

In the present invention, as the method of forming the coating layer, there may be used conventionally known coating methods such as a reverse gravure coating method, a direct gravure coating method, a roll coating method, a die coating method, a bar coating method and a curtain coating method which are described, for example, in Yuji HARAZAKI, "Coating Methods", Maki-shoten, 1979.

In the present invention, the drying and curing conditions used upon forming the coating layer on the polyester film are not particularly limited. For example, in the case where the coating layer is formed in an off-line coating manner, the coating layer may be subjected to heat treatment usually at a temperature of 80 to 200°C for 3 to 40 sec and preferably at a temperature of 100 to 180°C for 3 to 40 sec.

On the other hand, in the case where the coating layer is formed in an in-line coating manner, the coating layer may be subjected to heat treatment usually at a temperature of 70 to 280°C for 3 to 200 sec.

In any of the off-line coating and in-line coating methods, the heat treatment may be used in combination with irradiation with activation energy rays such as irradiation with ultraviolet rays, if required. The polyester film constituting the laminated polyester film of the present invention may be previously subjected to surface treatments such as corona treatment and plasma treatment.

In order to suppress occurrence of uneven interference, the coating layer according to the present invention is adjusted in its refractive index, and designed such that the refractive index of the coating layer is near a geometric mean of refractive indices of the polyester film as the base material and the light diffusion layer or the anti-sticking layer. The refractive index of the coating layer has a close relationship with a reflectance of the coating layer. When preparing a graph by plotting a wavelength of light irradiated onto the coating layer on an abscissa axis and a reflectance of the coating layer on an ordinate axis within the range of a thickness of the coating layer according to the present invention, it is preferred that one minimum value of the reflectance be observed in the wavelength range of 400 to 800 nm. In the case where the minimum value appears at the same wavelength, the minimum reflectance value becomes a high value when the refractive index of the coating layer is high, whereas the minimum reflectance value becomes a low value when the refractive index of the coating layer is low. In addition, in the present invention, the minimum reflectance value is varied depending upon the wavelength range within which the minimum value is observed, even when the coating layers are designed so as to be formed from the same material. More specifically, when comparing the coating layer whose minimum reflectance value is present within a shorter wavelength range with the coating layer whose minimum reflectance value is present within a longer wavelength range, the reflectance of the coating layer having the minimum reflectance value within a longer wavelength range becomes lower than the reflectance of the coating layer having the minimum reflectance value within a shorter wavelength range.

In the present invention, in order to attain a good reflectance of the coating layer, the minimum value of the reflectance as measured as an absolute reflectance is preferably in the range of 3.0 to 4.5%, more preferably 3.3 to 4.0% and still more preferably 3.4 to 3.9% when the minimum value is present within the wavelength range of not less than 350 nm and less than 550 nm. Whereas, the minimum value of the reflectance as the absolute reflectance is preferably in the range of 2.8 to 4.3%, more preferably 3.1 to 3.8% and still more preferably 3.2 to 3.7% when the minimum value is present within the wavelength range of not less than 550 nm and not more than 750 nm. In addition, when no minimum value is present within the wavelength range of not less than 350 nm and not more than 750 nm or when the minimum value is present out of the above-specified wavelength range, the resulting film tends to be deteriorated in visibility owing to occurrence of uneven interference after forming the light diffusion layer or the anti-sticking layer on the coating layer.

In the laminated polyester film of the present invention, a light diffusion layer, and optionally an anti-sticking layer, etc., is formed on the coating layer. The light diffusion layer comprises particles and a binder.

As the particles incorporated in the light diffusion layer, there may be used those particles having properties capable of diffusing light therein. Examples of the particles include organic particles of acrylic resins, acrylic urethane resins, urethane resins, polyester resins, polyvinyl resins, etc., and inorganic particles of silica, metal oxides, barium sulfate, etc. Among these particles, acrylic resins and acrylic urethane resins are preferably used because of a good transparency thereof. The particle diameter of these particles is limited, and an average particle diameter thereof is 1 to 50 µm and more preferably 5 to 15 µm.

The binder incorporated in the light diffusion layer is used for fixing the particles therein and allowing the light diffusion layer to exhibit a light diffusion property. Examples of the binder include polyester resins, acrylic resins, polyurethane resins, fluororesins, silicone-based resins, epoxy resins and ultraviolet-curable resins. Also, in view of a good processability, polyol compounds can be suitably used as the binder. Examples of the polyol compounds include acrylic polyols and polyester polyols.

When the polyol compound is used as the binder, an isocyanate is suitably used as a curing agent. When incorporating the isocyanate into the binder, it is possible to form a strong crosslinked structure, resulting in improved properties of the light diffusion layer. In addition, when the ultraviolet-curable resin is used as the binder, the resin is preferably an acrylic resin, so that the resulting light diffusion layer can be enhanced in hardness thereof.

The light diffusion layer may also comprise various additives such as a surfactant, a microfine inorganic filler, a plasticizer, a curing agent, an antioxidant, an ultraviolet absorber and a rust preventive agent unless the inherent light diffusion property of the light diffusion layer is adversely affected thereby.

The mixing ratio between the binder and the particles may be appropriately determined according to the aimed light diffusion property of the light diffusion layer. For example, the weight ratio of the binder to the particles [binder/particles] is in the range of 0.1 to 50 and preferably 0.5 to 20 although not particularly limited thereto.

As the method of forming the light diffusion layer, there may be used the method in which a coating solution comprising the binder and the particles is prepared and then applied and dried. Examples of the coating method include conventionally known coating methods such as a reverse gravure coating method, a direct gravure coating method, a roll coating method, a die coating method, a bar coating method, a curtain coating method, a spray coating method and a spin coating method. The thickness of the light diffusion layer is limited, and is in the range of 1 to 100 µm and preferably 3 to 30 µm in view of a good light diffusion property and a high film strength of the resulting layer, etc.

On the surface of the polyester film which is opposite to the surface where the light diffusion layer is provided, the anti-sticking layer is preferably formed thereon through the coating layer. The anti-sticking layer may comprise a binder and particles similarly to the light diffusion layer. The particles to be incorporated in the anti-sticking layer may generally have a smaller particle diameter and a less content as compared to those in the light diffusion layer because in the the anti-sticking layer, it is not required to attain a good light diffusion property by the particles. The anti-sticking layer may be formed in the same manner as the light diffusion layer. The thickness of the anti-sticking layer is not particularly limited, and is preferably in the range of 1 to 10 µm.

### EFFECT OF THE INVENTION

According to the present invention, there can be provided the laminated polyester film for a light diffusion sheet, forming a light diffusion layer, and optionally an anti-sticking layer, which is free from occurrence of uneven interference, and excellent in adhesion property and reusability. Therefore, the present invention has high industrial value.

### PREFERRED EMBODIMENTS FOR CARRYING OUT THE INVENTION

The present invention is described in more detail below by Examples. However, these Examples are only illustrative and not intended to limit the present invention thereto, and other changes or modifications may be possible and involved in the scope of the present invention unless departing from the subject matter of the present invention. In addition, the measuring and evaluating methods used in the present invention are as follows.

### (1) Measurement of intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Measurement of average particle diameter (d₅₀: µm):

Using a centrifugal precipitation type particle size distribution measuring apparatus "SA-CP3 Model" manufactured by Shimadzu Seisakusho Co., Ltd., the value of a particle size corresponding to a cumulative fraction of 50% in equivalent spherical distribution of the particles was measured as an average particle diameter.

### (3) Method of measuring minimum value of absolute reflectance from surface of coating layer formed on polyester film:

A black tape ("Vinyl Tape VT-50" produced by Nichiban Co., Ltd.) was previously attached to a back surface of a polyester film which was opposite to its surface to be measured, and the surface of a coating layer formed on the polyester film was subjected to measurement for an absolute reflectance thereof in a wavelength range of 300 to 800 nm using a spectrophotometer (an ultraviolet/visible spectrophotometer "V-570" and an automatic absolute reflectance analyzer "AM-500N" both manufactured by JASCO Corp.) under the conditions including a synchronous mode; an incident angle of 5°; N-polarization; response: Fast; data sampling interval: 1.0 nm; band width: 10 nm; scanning speed: 1000 m/min, to thereby evaluate a wavelength at a minimum value of the reflectance (bottom wavelength) as well as an absolute reflectance.

### (4) Method for evaluation of uneven interference:

A coating solution for a light diffusion layer comprising 60 parts of an acrylic polyol ("ACRYDIC A-801" produced by DIC Corp.), 15 parts of a polyisocyanate ("TAKENATE D110N" produced by Mitsui Chemical Polyurethane Co., Ltd.), 25 parts of acrylic resin particles having an average particle diameter of 15 µm ("MBX-15" produced by Sekisui Plastics Co., Ltd.), 100 parts of toluene and 100 parts of methyl ethyl ketone was prepared, and applied on a surface of a polyester film through a coating layer and heat-cured to form a light diffusion layer having a thickness of 15 g/m². In addition, a coating solution for an anti-sticking layer was prepared in the same manner as used for production of the coating solution for a light diffusion layer except that the acrylic resin particles having an average particle diameter of 15 µm were replaced with 7 parts of acrylic resin particles having an average particle diameter of 5 µm ("MBX-5" produced by Sekisui Plastics Co., Ltd.), and applied on the other surface of the polyester film opposite to its surface where the light diffusion layer was provided, through a coating layer, to form the anti-sticking layer having a thickness of 3 g/m², thereby producing a double side-treated film product. Then, a black tape ("Vinyl Tape VT-50" produced by Nichiban Co., Ltd.) was attached to the light diffusion layer side surface of the resulting film, and the thus obtained film was visually observed from the anti-sticking layer side under irradiation of light from a three-band type fluorescent lamp to evaluate occurrence of uneven interference. The evaluation results are classified into the following ratings.
⊚: No uneven interference was observed.
○: Uneven interference with unclear colors was observed.
Δ: Uneven interference with colors distinguishable from each other was observed.
×: Strong uneven interference with colors clearly distinguishable from each other was observed, and the uneven interference was recognized even under a white fluorescent lamp.

An ordinary light diffusion layer has a high light diffusion property similarly to the above light diffusion layer, and therefore exhibits substantially no uneven interference. However, in the case of a light diffusion layer having a low light diffusion property, it is important to adjust a refractive index of the coating layer because there is a possibility that any uneven interference may be observed. On the other hand, in the case of an anti-sticking layer formed of particles and a binder similarly to the light diffusion layer, it is general that the content of the particles blended therein is less and the thickness thereof is smaller as compared to those of the light diffusion layer. For this reason, the light diffusion property of the anti-sticking layer becomes low, and uneven interference may be observed therein. Therefore, it becomes very important to adjust a refractive index of the coating layer for the anti-sticking layer.

### (5) Method for evaluation of adhesion property:

The laminated polyester film provided on one surface thereof with a light diffusion layer and on the other surface thereof with an anti-sticking layer was produced in the same manner as described in the above method for evaluation of uneven interference. Thereafter, the laminated polyester film was allowed to stand in a thermo-hygrostat at a temperature of 80°C and a humidity of 85% RH for 50 hr. Then, a 18 mm-width tape ("Cellotape (registered trademark) CT-18" produced by Nichiban Co., Ltd.) was attached onto each of the light diffusion layer and the anti-sticking layer of the laminated polyester film, and rapidly released therefrom at a peel angle of 180° to observe released surfaces of the film. The released surface having a larger peel area was used to evaluate an adhesion property of the film, and the evaluation results were classified into the following ratings.
⊚: The peel area was 0%.
○: The peel area was more than 0% and not more than 5%.
Δ: The peel area was more than 5% and not more than 20%.
×: The peel area was more than 20%.

In general, the anti-sticking layer has less surface irregularities and exhibits good adhesion to the tape to be peeled therefrom, and therefore tends to has a large peel area as compared to that of the light diffusion layer.

### (6) Measurement of thickness of polyester layer:

A film piece was fixedly molded with an epoxy resin, and cut using a microtome. The section of the thus cut film piece was observed using a transmission electron microscope, so that two interfaces substantially parallel with the surface of the film due to contrast were observed in the section. The distance between each of the interfaces and the surface of the film was measured from 10 photographs, and an average value of the measured distances was determined as a thickness of the polyester layer.

### (7) Method for evaluation of reusability:

The same procedure as defined in the below-mentioned Example 1 was conducted except that a mixture comprising the polyesters (A) and (B) used in Example 1 and 66%, 4% or 30% of the respective polymers to be reused which were obtained in the respective Examples was used as a raw material of an intermediate layer of the polyester film, and no coating layer was formed thereon, thereby obtaining a polyester film having a thickness of 188 µm. The b* value of the resulting polyester film was measured using a spectrophotometric colorimeter ("CM-3700d" manufactured by Konica-Minolta Sensing Co., Ltd.) by a reflection method using 5 sheets thereof. The hue of the film is preferably neutral, and the b* value thereof is preferably in the range of -4.5 to +4.5, more preferably -3.5 to +3.5 and still more preferably -3.0 to +3.0. The evaluation ratings determined by an absolute value of the b* value are as follows.
⊚: Not more than 3.0.
○: More than 3.0 and not more than 3.5.
Δ: More than 3.5 and not more than 4.5.
×: More than 4.5.

In the aimed applications of the present invention, the film having an absolute value of the b* value of not more than 4.5 is regarded as being practically acceptable.

### (8) Measurement of transmittance at a wavelength of 380 nm:

Using a spectrophotometer ("UV-3100PC Model" manufactured by Shimadzu Seisakusho Corp.), the light transmittance of the film was continuously measured at a low scanning speed and a sampling pitch of 2 nm in a wavelength range of 300 to 700 nm to detect a light transmittance at 380 nm.

The polyesters used in the respective Examples and Comparative Examples were prepared by the following methods.

### <Method for producing polyester (A)>

One hundred parts by weight of dimethyl terephthalate and 60 parts by weight of ethylene glycol as starting materials were charged together with tetrabutoxytitanate as a catalyst into a reaction vessel, and the reaction therebetween was initiated at 150°C. The reaction temperature was gradually raised while distilling off methanol as produced, and allowed to reach 230°C after 3 hr. After 4 hr, the transesterification reaction was substantially terminated, and then the resulting product was subjected to polycondensation reaction for 4 hr.

More specifically, the reaction temperature was gradually raised from 230°C until reaching 280°C. On the other hand, the reaction pressure was gradually reduced from normal pressures until finally reaching 0.3 mmHg. After initiation of the reaction, the change in agitation power in the reaction vessel was monitored, and the reaction was terminated at the time at which a viscosity of the reaction solution reached the value corresponding to an intrinsic viscosity of 0.63 on the basis of the change in agitation power in the reaction vessel. The resulting polymer was discharged under application of a nitrogen pressure from the reaction vessel, thereby obtaining a polyester (A) having an intrinsic viscosity of 0.63.

### <Method for producing polyester (B)>

One hundred parts by weight of dimethyl terephthalate and 60 parts by weight of ethylene glycol as starting materials were charged together with magnesium acetate tetrahydrate as a catalyst into a reaction vessel, and the reaction therebetween was initiated at 150°C. The reaction temperature was gradually raised while distilling off methanol as produced, and allowed to reach 230°C after 3 hr. After 4 hr, the transesterification reaction was substantially terminated. The obtained reaction mixture was transferred to a polycondensation reaction vessel, and mixed with orthophosphoric acid and then with germanium dioxide, followed by subjecting the resulting mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, the change in agitation power in the reaction vessel was monitored, and the reaction was terminated at the time at which a viscosity of the reaction solution reached the value corresponding to an intrinsic viscosity of 0.65 on the basis of the change in agitation power in the reaction vessel. The resulting polymer was discharged under application of a nitrogen pressure from the reaction vessel, thereby obtaining a polyester (B) having an intrinsic viscosity of 0.65.

### <Method for producing polyester (C)>

The same procedure as defined in the above method for producing the polyester (A) was conducted except that silica particles having an average particle diameter of 2.0 µm in the form of a dispersion in ethylene glycol were added in an amount of 0.2 part, and the reaction was terminated at the time at which a viscosity of the reaction solution reached the value corresponding to an intrinsic viscosity of 0.66, thereby obtaining a polyester (C) having an intrinsic viscosity of 0.66.

### <Method for producing polyester (D)>

The polyester (A) was charged into a vented twin-screw extruder, and 2,2-(1,4-phenylene)bis[4H-3,1-benzoxazin-4-one] ("CYASORB UV-3638" produced by CYTEC Corp.; molecular weight: 369; benzoxazinone-based compound) as an ultraviolet absorber was further added thereto such that a concentration of the ultraviolet absorber in the resulting mixture was 10% by weight. The thus obtained mixture was melt-kneaded and extruded therefrom to form chips, thereby obtaining an ultraviolet absorber-containing master batch polyester (D). The resulting polyester (D) had an intrinsic viscosity of 0.60.

The compounds constituting the coating layer are as follows.

### (Examples of compounds)

### <Condensed polycyclic aromatic compounds>

### (I) Water dispersion of polyester resin obtained by copolymerizing the following composition:

Monomer composition: (acid component) 2,6-naphthalenedicarboxylic acid/isophthalic acid/5-sodium sulfoisophthalic acid//(diol component) ethylene glycol/diethylene glycol = 84/13/3//80/20 (mol%)

### <Acrylic resin>

### (IIA) Water dispersion of acrylic resin obtained by polymerizing the following composition:

Emulsion polymer (emulsifier: anionic surfactant) produced from ethyl acrylate/n-butyl acrylate/methyl methacrylate/N-methylol acrylamide/acrylic acid = 65/21/10/2/2 (% by weight)

### <Acrylic resin>

### (IIB) Water dispersion of acrylic resin obtained by polymerizing the following composition:

Emulsion polymer (emulsifier: anionic surfactant) produced from ethyl acrylate/methyl methacrylate/2-hydroxyethyl methacrylate/N-methylol acrylamide/acrylic acid = 65/28/3/2/2 (% by weight)

### <Urethane resin>

(IIC) "NEOREZ R-960" produced by DMS Neoresins Inc.

### <Urethane resin>

(IID) "HYDRAN AP-40" produced by DIC Corp.

### <Polyester resin>

### (III) Water dispersion of polyester resin obtained by copolymerizing the following composition:

Monomer composition: (acid component) terephthalic acid/isophthalic acid/5-sodium sulfoisophthalic acid//(diol component) ethylene glycol/1,4-butanediol/diethylene glycol = 56/40/4//70/20/10 (mol%)

### <Epoxy compound>

(IVA) Ethylene glycol diglycidyl ether

### <Melamine compound>

(IVB) Hexamethoxymethyl melamine

### <Particles>

(V) Silica sol having an average particle diameter of 65 nm

### <Metal chelate compound>

(VI) Titanium triethanol aminate

### Example 1:

A mixed raw material obtained by mixing the polyesters (A), (B) and (C) in amounts of 85%, 5% and 10%, respectively, as a raw material for outermost layers (surface layers), and a mixed raw material obtained by mixing the polyesters (A) and (B) in amounts of 95% and 5%, respectively, as a raw material for an intermediate layer, were respectively charged into two extruders, melted therein at 293°C, and then co-extruded therefrom on a cooling roll whose surface was controlled to a temperature of 40°C to form a sheet having a two-kind/three-layer structure (surface layer/intermediate layer/surface layer), followed by cooling and solidifying the thus extruded sheet on the cooling roll, thereby obtaining an unstretched sheet. Next, the thus obtained unstretched sheet was stretched utilizing a difference between peripheral speeds of rolls at 85°C and a stretch ratio of 3.4 times in a longitudinal direction thereof. Thereafter, a coating solution 1 shown in the below-mentioned Table 1 was applied on on both surfaces of the thus obtained longitudinally stretched sheet, and then the resulting sheet was introduced into a tenter where the sheet was stretched at 120°C and a stretch ratio of 4.0 times in a lateral direction thereof and then heat-treated at 225°C. Next, the obtained stretched sheet was relaxed by 2% in a lateral direction thereof, thereby obtaining a polyester film having a thickness of 188 µm (each surface layer: 9 µm; intermediate layer: 170 µm) which was provided on each surface thereof with a coating layer having a coating amount of 0.10 g/m² (after dried).

The absolute reflectance of the thus obtained polyester film was measured in a wavelength range of 300 to 800 nm. As a result, it was confirmed that the wavelength at a minimum value of the reflectance (bottom wavelength) was 440 nm, and the absolute reflectance at the bottom wavelength was 3.8%. The obtained polyester film was free from occurrence of uneven interference after forming the anti-sticking layer on the coating layer, and exhibited a good visibility as well as good adhesion property and reusability. The properties of the thus obtained film are shown in Table 2 below.

### Examples 2 to 8:

The same procedure as defined in Example 1 was conducted except that the coating agent composition was changed to those shown in Table 1, thereby obtaining polyester films. The properties of the thus obtained polyester films are shown in Table 2. As a result of evaluating occurrence of uneven interference after forming the anti-sticking layer, it was confirmed that the respective polyester films had a good visibility as well as good adhesion property and reusability.

### Comparative Examples 1 to 3:

The same procedure as defined in Example 1 was conducted except that the coating agent composition was changed to those shown in Table 1, thereby obtaining polyester films. The evaluation results of the thus obtained laminated polyester films are as shown in Table 2. As recognized from Table 2, the obtained films had a poor level as to occurrence of uneven interference, exhibited a low adhesion property, and were deteriorated in reusability.

**Table 1**

| Coating solutions | Coating agent compositions | | | | | | | |
|---|---|---|---|---|---|---|---|---|
| | I | IIA | IIB | III | IVA | IVB | V | VI |
| Coating solution 1 | 30 | 30 | 0 | 25 | 10 | 0 | 5 | 0 |
| Coating solution 2 | 45 | 40 | 0 | 0 | 10 | 0 | 5 | 0 |
| Coating solution 3 | 35 | 30 | 0 | 25 | 0 | 5 | 5 | 0 |
| Coating solution 4 | 65 | 30 | 0 | 0 | 0 | 0 | 5 | 0 |
| Coating solution 5 | 30 | 30 | 0 | 35 | 0 | 0 | 5 | 0 |
| Coating solution 6 | 20 | 20 | 0 | 55 | 0 | 0 | 5 | 0 |
| Coating solution 7 | 30 | 0 | 30 | 35 | 0 | 0 | 5 | 0 |
| Coating solution 8 | 45 | 0 | 50 | 0 | 0 | 0 | 5 | 0 |
| Coating solution 9 | 0 | 50 | 0 | 45 | 0 | 0 | 5 | 0 |
| Coating solution 10 | 55 | 0 | 0 | 40 | 0 | 0 | 5 | 0 |
| Coating solution 11 | 0 | 0 | 0 | 40 | 0 | 0 | 5 | 55 |

Meanwhile, each of the above coating solutions was used in the form of an aqueous solution having a concentration of 10% by weight.

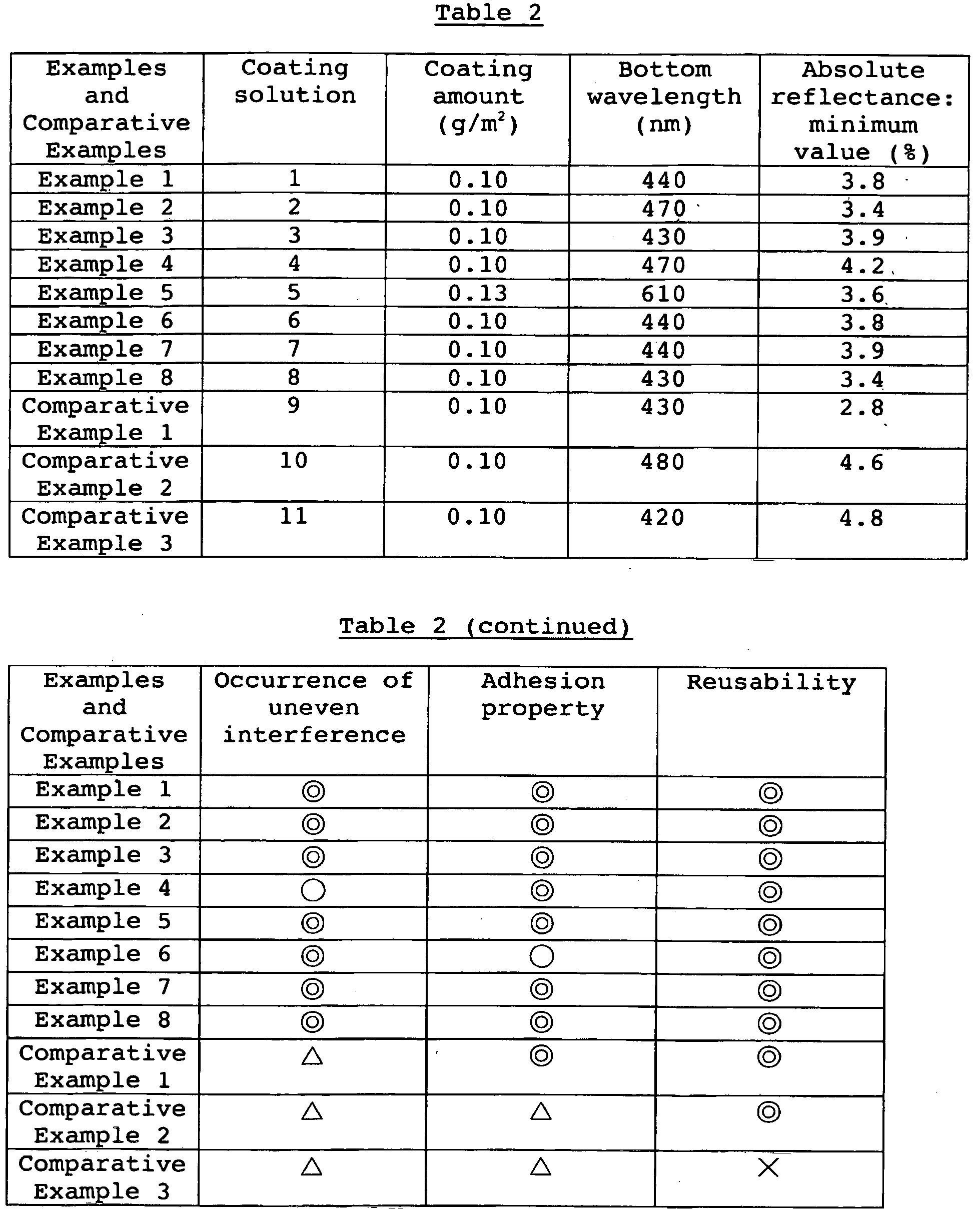

### Example 9:

The same procedure as defined in Example 1 was conducted except that the coating agent composition was changed to that shown in Table 3 below, thereby obtaining a polyester film. As a result of measuring an absolute reflectance of the thus obtained polyester film in a wavelength range of 300 to 800 nm, it was confirmed that the wavelength at a minimum value of the reflectance (bottom wavelength) was 430 nm, and the absolute reflectance at the bottom wavelength was 3.7%. The obtained polyester film was free from occurrence of uneven interference in the anti-sticking layer and exhibited a good visibility as well as a good adhesion property. The properties of the thus obtained film are shown in Table 4 below.

### Examples 10 to 14:

The same procedure as defined in Example 9 was conducted except that the coating agent composition was changed to those shown in Table 3 below, thereby obtaining polyester films. The properties of the thus obtained polyester films are shown in Table 4. As a result of evaluating occurrence of uneven interference after forming the anti-sticking layer, it was confirmed that the respective polyester films had a good visibility as well as a good adhesion property.

### Comparative Example 4:

The same procedure as defined in Example 9 was conducted except that the coating agent composition was changed to that shown in Table 3, thereby obtaining a polyester film. The evaluation results of the thus obtained polyester film are as shown in Table 4.

**Table 3**

| Coating solutions | Coating agent compositions | | | | | |
|---|---|---|---|---|---|---|
| | I | IIC | IID | III | IVA | V |
| Coating solution 12 | 30 | 35 | 0 | 20 | 10 | 5 |
| Coating solution 13 | 20 | 20 | 0 | 55 | 0 | 5 |
| Coating solution 14 | 60 | 35 | 0 | 0 | 0 | 5 |
| Coating solution 15 | 15 | 0 | 40 | 30 | 10 | 5 |
| Coating solution 16 | 35 | 0 | 60 | 0 | 0 | 5 |
| Coating solution 17 | 30 | 30 | 0 | 25 | 10 | 5 |
| Coating solution 18 | 0 | 60 | 0 | 35 | 0 | 5 |

Meanwhile, each of the above coating solutions was used in the form of an aqueous solution having a concentration of 10% by weight.

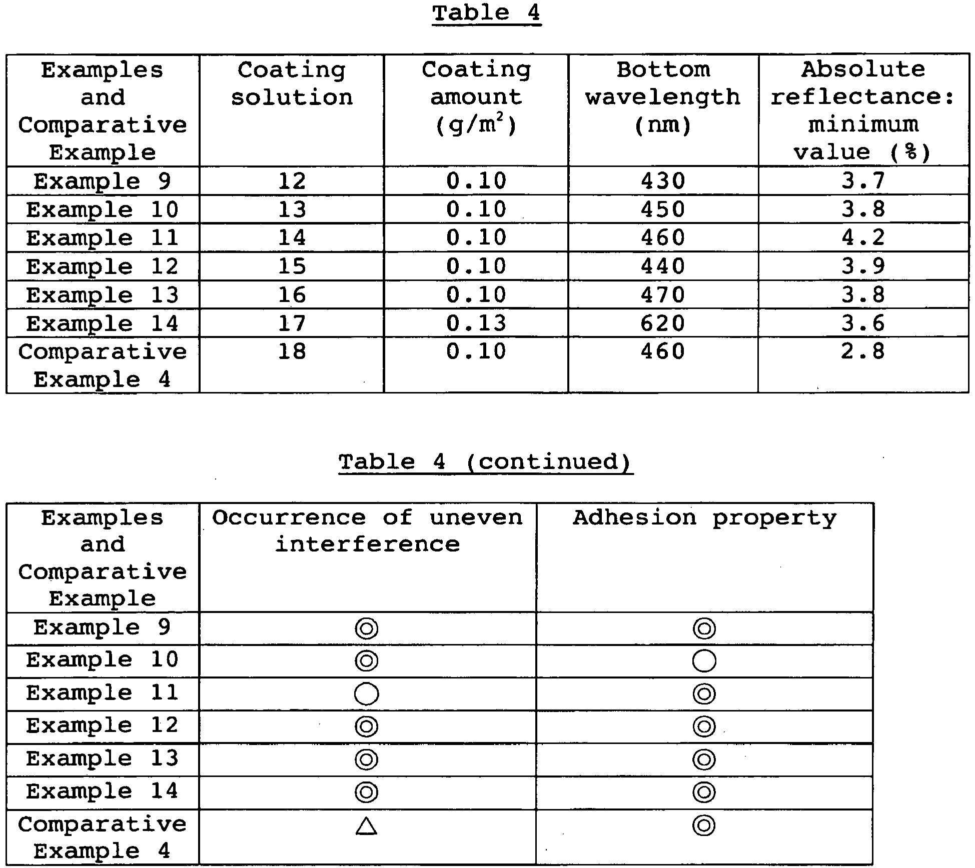

### Example 15:

A mixed raw material obtained by mixing the polyesters (A), (B) and (C) in amounts of 85%, 5% and 10%, respectively, as a raw material for outermost layers (surface layers), and a mixed raw material obtained by mixing the polyesters (A), (B) and (D) in amounts of 92%, 5% and 3%, respectively, as a raw material for an intermediate layer, were respectively charged into two extruders, melted therein at 293°C, and then co-extruded therefrom on a cooling roll whose surface was controlled to a temperature of 40°C to form a sheet having a two-kind/three-layer structure (surface layer/intermediate layer/surface layer), followed by cooling and solidifying the thus extruded sheet on the cooling roll, thereby obtaining an unstretched sheet. Next, the thus obtained unstretched sheet was stretched utilizing a difference between peripheral speeds of rolls at 85°C and a stretch ratio of 3.4 times in a longitudinal direction thereof. Thereafter, a coating solution 1 shown in Table 1 was applied on both surfaces of the thus obtained longitudinally stretched sheet, and then the resulting sheet was introduced into a tenter where the sheet was stretched at 120°C and a stretch ratio of 4.0 times in a lateral direction thereof and then heat-treated at 225°C. Next, the obtained stretched sheet was relaxed by 2% in a lateral direction thereof, thereby obtaining a polyester film having a thickness of 188 µm (each surface layer: 9 µm; intermediate layer: 170 µm) which was provided on each surface thereof with a coating layer having a coating amount of 0.10 g/m² (after dried).

The absolute reflectance of the thus obtained polyester film was measured in a wavelength range of 300 to 800 nm. As a result, it was confirmed that the wavelength at a minimum value of the reflectance (bottom wavelength) was 440 nm, and the absolute reflectance at the bottom wavelength was 3.8%. The obtained polyester film was free from occurrence of uneven interference after forming the anti-sticking layer on the coating layer, and exhibited a good visibility as well as a good adhesion property. Further, the polyester film had a transmittance of 4% at 380 nm. As a result, it was confirmed that the polyester film well absorbed an ultraviolet ray. The properties of the thus obtained film are shown in Table 5 below.

### Examples 16 to 22:

The same procedure as defined in Example 15 was conducted except that the coating agent composition was changed to those shown in Table 1, thereby obtaining polyester films. The properties of the thus obtained polyester films are shown in Table 5. As a result of evaluating occurrence of uneven interference after forming the anti-sticking layer, it was confirmed that the respective polyester films had a good visibility as well as good adhesion property and ultraviolet absorptivity.

### Example 23:

The same procedure as defined in Example 15 was conducted except that a mixed raw material obtained by mixing the polyesters (A), (B) and (D) in amounts of 91%, 5% and 4%, respectively, was used as a raw material for an intermediate layer, thereby obtaining a polyester film. The properties of the thus obtained polyester film are shown in Table 5. The polyester film had a transmittance of 1% at 380 nm. As a result, it was confirmed that the polyester film well absorbed an ultraviolet ray.

### Example 24:

The same procedure as defined in Example 15 was conducted except that a mixed raw material obtained by mixing the polyesters (A), (B) and (D) in amounts of 93%, 5% and 2%, respectively, was used as a raw material for an intermediate layer, thereby obtaining a polyester film. The properties of the thus obtained polyester film are shown in Table 5. The polyester film had a transmittance of 9% at 380 nm. As a result, it was confirmed that the polyester film well absorbed an ultraviolet ray.

### Comparative Examples 5 to 7:

The same procedure as defined in Example 15 was conducted except that the coating agent composition was changed to those shown in Table 1, thereby obtaining polyester films. The evaluation results of the thus obtained laminated polyester films are as shown in Table 5. As recognized from Table 5, the obtained films had a poor level as to occurrence of uneven interference, and exhibited a low adhesion property.

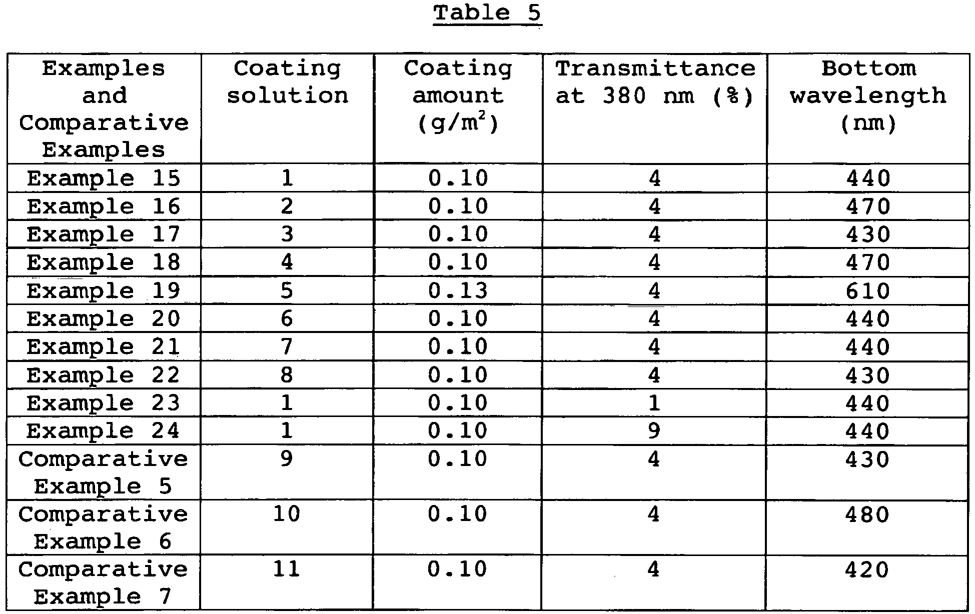

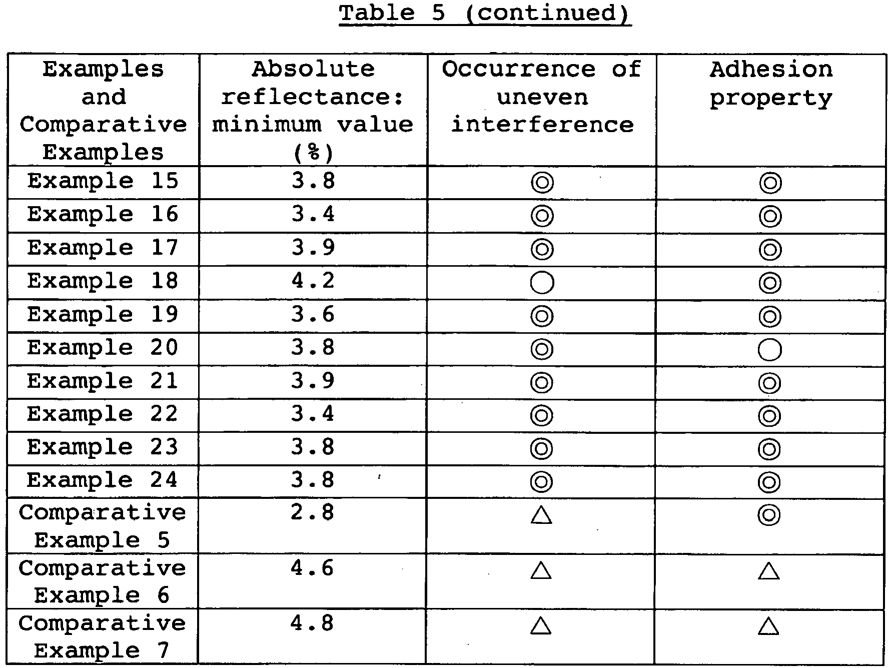

### Example 25:

The same procedure as defined in Example 15 was conducted except that the coating agent composition was changed to that shown in Table 3, thereby obtaining a polyester film. The absolute reflectance of the thus obtained polyester film was measured in a wavelength range of 300 to 800 nm. As a result, it was confirmed that the wavelength at a minimum value of the reflectance (bottom wavelength) was 430 nm, and the absolute reflectance at the bottom wavelength was 3.7%. The obtained polyester film was free from occurrence of uneven interference after forming the anti-sticking layer on the coating layer, and exhibited a good visibility as well as a good adhesion property. Further, the polyester film had a transmittance of 4% at 380 nm. As a result, it was confirmed that the polyester film well absorbed an ultraviolet ray. The properties of the thus obtained film are shown in Table 6 below.

### Examples 26 to 30:

The same procedure as defined in Example 25 was conducted except that the coating agent composition was changed to those shown in Table 3, thereby obtaining polyester films. The properties of the thus obtained polyester films are shown in Table 6. As a result of evaluating occurrence of uneven interference after forming the anti-sticking layer, it was confirmed that the respective polyester films had a good visibility as well as good adhesion property and ultraviolet absorptivity.

### Example 31:

The same procedure as defined in Example 25 was conducted except that in Example 23, the coating agent composition was changed to that shown in Table 3, thereby obtaining a polyester film. The properties of the thus obtained polyester film are shown in Table 6. Further, the polyester film had a transmittance of 1% at 380 nm. As a result, it was confirmed that the polyester film well absorbed an ultraviolet ray.

### Example 32:

The same procedure as defined in Example 25 was conducted except that in Example 24, the coating agent composition was changed to that shown in Table 3, thereby obtaining a polyester film. The properties of the thus obtained polyester film are shown in Table 6. Further, the polyester film had a transmittance of 9% at 380 nm. As a result, it was confirmed that the polyester film well absorbed an ultraviolet ray.

### Comparative Example 8:

The same procedure as defined in Example 25 was conducted except that the coating agent composition was changed to that shown in Table 3, thereby obtaining a polyester film. The evaluation results of the thus obtained laminated polyester film are as shown in Table 6. As recognized from Table 6, the obtained film had a poor level as to occurrence of uneven interference, and exhibited a low adhesion property.

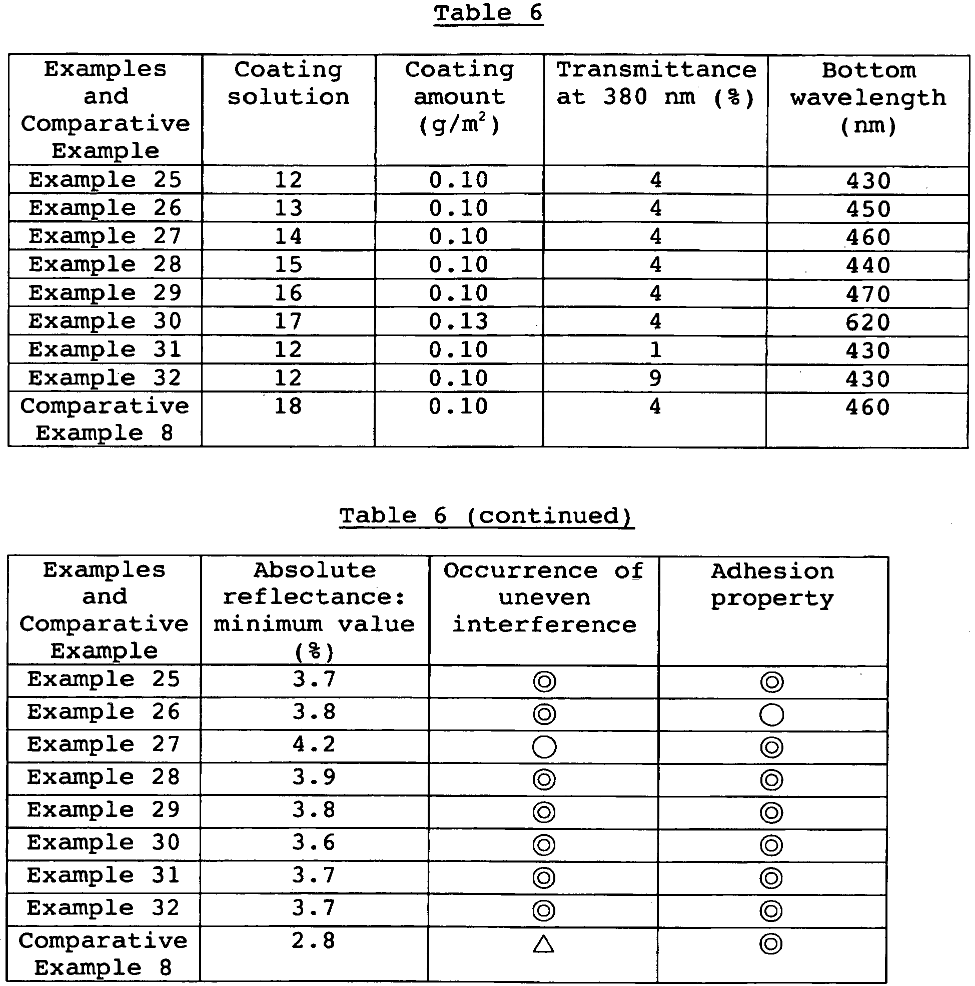

### INDUSTRIAL APPLICABILITY

The film of the present invention can be suitably used in the applications in which occurrence of uneven interference owing to reflection of light should be reduced, such as, for example, a backlight unit for liquid crystal displays.

## Claims

1. A laminated polyester film comprising
a polyester film,
coating layers respectively formed on both surfaces of the polyester film, said coating layers each comprising a condensed polycyclic aromatic compound, and 5 to 90 % by weight of a urethane resin or 5 to 80 % by weight of an acrylic resin, and
a light diffusion layer formed on the coating layer and which has a thickness of 1 to 100 µm and which comprises a binder and particles having an average particle diameter of 1 to 50 µm,
wherein the content of the condensed polycyclic aromatic moieties in the condensed polycyclic aromatic compound in the coating layer is in the range of 5 to 80 % by weight, and the content of the condensed polycyclic aromatic moieties in the coating layer is in the range of 1 to 70 % by weight.

2. A laminated polyester film according to claim 1, wherein the polyester film comprises an ultraviolet absorber.

3. A laminated polyester film according to claim 2, wherein the ultraviolet absorber is a benzoxazinone-based compound.

4. The laminated polyester film according to claim 1, wherein the particles include organic particles and/or inorganic particles, wherein organic particles are selected from acrylic resins, acrylic urethane resins, urethane resins, polyester resins and polyvinyl resins, and inorganic particles are selected from silica, metal oxides and barium sulphate, and wherein the binder is a polyol including acrylic polyols and/or polyester polyols.

5. The laminated polyester film according to claim 4 , wherein the weight ratio of the binder to the particles [binder/particles] is in the range of 0.1 to 50.

## Patentansprüche

1. Laminierte Polyesterfolie, umfassend:
eine Polyesterfolie,
jeweils auf beiden Seiten der Polyesterfolie gebildete Überzugsschichten, wobei die Überzugsschichten jeweils eine kondensierte polycyclische aromatische Verbindung und 5 bis 90 Gew.-% eines Urethanharzes oder 5 bis 80 Gew.-% eines Acrylharzes umfassen, und
eine Lichtdiffusionsschicht, die auf der Überzugsschicht gebildet ist, und welche eine Dicke von 1 bis 100 µm besitzt und welche ein Bindemittel und Teilchen mit einem durchschnittlichen Teilchendurchmesser von 1 bis 50 µm umfasst,
wobei der Gehalt der kondensierten polycyclischen aromatischen Einheiten in der kondensierten polycyclischen aromatischen Verbindung in der Überzugsschicht im Bereich von 5 bis 80 Gew.-% liegt, und der Gehalt der kondensierten polycyclischen aromatischen Einheiten in der Überzugsschicht im Bereich von 1 bis 70 Gew.-% liegt.

2. Laminierte Polyesterfolie nach Anspruch 1, wobei die Polyesterfolie einen Ultraviolet-Absorber umfasst.

3. Laminierte Polyesterfolie nach Anspruch 3, wobei der Ultraviolet-Absorber eine Verbindung auf Benzoxazinon-Basis ist.

4. Laminierte Polyesterfolie nach Anspruch 1, wobei die Teilchen organische Teilchen und/oder anorganische Teilchen beinhalten, wobei die organischen Teilchen gewählt sind aus Acrylharzen, Acryl-Urethan-Harzen, Urethanharzen, Polyesterharzen und Polyvinylharzen, und die anorganischen Teilchen gewählt sind aus Silica, Metalloxiden und Bariumsulfat, und wobei das Bindemittel ein Polyol ist einschließlich Acrylpolyolen und/oder Polyesterpolyolen.

5. Laminierte Polyesterfolie nach Anspruch 4, wobei das Gewichtsverhältnis des Bindemittels zu den Teilchen [Bindemittel/Teilchen] im Bereich von 0,1 bis 50 liegt.

## Revendications

1. Film de polyester stratifié comprenant :
un film de polyester,
des couches de revêtement formées respectivement sur les deux surfaces du film de polyester, lesdites couches de revêtement comprenant chacune un composé aromatique polycyclique condensé, et de 5 à 90 % en poids d'une résine d'uréthane ou de 5 à 80 % en poids d'une résine acrylique, et
une couche de diffusion de lumière formée sur la couche de revêtement et qui a une épaisseur de 1 à 100 µm et qui comprend un liant et des particules ayant un diamètre de particule moyen de 1 à 50 µm,
dans lequel la teneur en fragments aromatiques polycycliques condensés dans le composé aromatique polycyclique condensé dans la couche de revêtement est comprise dans la plage allant de 5 à 80 % en poids, et la teneur en fragments aromatiques polycycliques condensés dans la couche de revêtement est comprise dans la plage allant de 1 à 70 % en poids.

2. Film de polyester stratifié selon la revendication 1, dans lequel le film de polyester comprend un absorbeur d'ultraviolets.

3. Film de polyester stratifié selon la revendication 2, dans lequel l'absorbeur d'ultraviolets est un composé à base de benzoxazinone.

4. Film de polyester stratifié selon la revendication 1, dans lequel les particules comprennent des particules organiques et/ou des particules inorganiques, dans lequel les particules organiques sont sélectionnées parmi les résines acryliques, les résines d'uréthane acrylique, les résines d'uréthane, les résines de polyester et les résines polyvinyliques, et les particules inorganiques sont sélectionnées parmi la silice, les oxydes métalliques et le sulfate de baryum, et dans lequel le liant est un polyol comprenant des polyols acryliques et/ou des polyols de polyester.

5. Film de polyester stratifié selon la revendication 4, dans lequel le rapport en poids du liant aux particules [liant/particules] est compris dans la plage allant de 0,1 à 50.
